## Europäisches Patentamt

**European Patent Office**

**Office européen des brevets**

(19)

(11) Veröffentlichungsnummer: **0 279 292 B1**

(12)

# EUROPÄISCHE PATENTSCHRIFT

(45) Veröffentlichungstag der Patentschrift :
17.04.91 Patentblatt 91/16

(51) Int. Cl.⁵ : **B01D 45/06, F04C 19/00**

(21) Anmeldenummer : **88101635.6**

(22) Anmeldetag : **04.02.88**

(54) **Flüssigkeitsabschneider.**

(30) Priorität : **17.02.87 DE 3704997**

(43) Veröffentlichungstag der Anmeldung :
**24.08.88 Patentblatt 88/34**

(45) Bekanntmachung des Hinweises auf die
Patenterteilung :
**17.04.91 Patentblatt 91/16**

(84) Benannte Vertragsstaaten :
**AT DE IT NL**

(56) Entgegenhaltungen :
**EP-A- 0 126 346**
**WO-A-86/00117**
**DE-A- 2 558 401**
**FR-A- 1 428 900**

(73) Patentinhaber : **Siemens Aktiengesellschaft**
**Wittelsbacherplatz 2**
**W-8000 München 2 (DE)**

(72) Erfinder : **Barany, Alfred**
**Katzwanger Strasse 12**
**W-8508 Wendelstein (DE)**

## Beschreibung

Die Erfindung betrifft einen Flüssigkeitsabscheider mit zwei bodenseitigen Einlaßstutzen, einem deckseitigen Auslaßstutzen für das Fördermedium und einem bodenseitigen Flüssigkeitsablauf für eine in Sparschaltung betriebene doppelflutige Flüssigkeitsringmaschine nach dem Oberbegriff des Anspruchs 1.

Bei einer solchen Flüssigkeitsringmaschine der Siemens-Type 2BE1 kann durch herstellungsbedingte relativ geringfügige Unsymmetrien im Gehäuse, Schaufelrad und gegebenenfalls in den Seitenschilden bei Betrieb in Sparschaltung, bei der eine interne Rückführung der in den Drucktaschen beider Seitenschilde befindlichen Flüssigkeit in den rotierenden Flüssigkeitsring über die interne Verbindung innerhalb der Drucktaschen beider Seitenschilde erfolgen soll, insbesondere bei relativ kleinen Ansaugdrücken Luft von der Drucktasche des einen Seitenschildes in den rotierenden Flüssigkeitsring gefördert und dadurch eine Leistungsminderung der Flüssigkeitsringmaschine hervorgerufen werden. Zur Vermeidung dieses Nachteils hat man diesen Maschinentypen im Sparschaltungsbetrieb die internen Verbindungen in den jeweiligen Drucktaschen durch gesonderte Eingriffe reduziert, was aber eine ergänzende Zufuhr an Betriebsflüssigkeit von außen erforderlich macht, so daß der Effekt der Sparschaltung gemindert wird. Unter Umständen hat man die internen Verbindungen vollständig verschließen müssen, wodurch ein Betrieb in Sparschaltung überhaupt nicht möglich ist, es sei denn man ordnet in bekannter Weise externe Verbindungsleitungen zwischen Abscheider und Maschine an.

Der Erfindung liegt die Aufgabe zugrunde, eine doppelflutige Flüssigkeitsringmaschine der eingangs genannten Art mit aufgesetztem Flüssigkeitsabscheider ohne solche Eingriffe und ohne zusätzliche externe Verbindungsleitungen einwandfrei und ohne die Gefahr einer Leistungsminderung durch fertigungsbedingte Unsymmetrien in Sparschaltung betreiben zu können allein durch Verwendung eines entsprechend abgewandelten Flüssigkeitsabscheiders.

Zur Lösung des Problems ist der Flüssigkeitsabscheider nach der Erfindung entsprechend den kennzeichnenden Merkmalen des Anspruchs 1 ausgebildet. Wesentlich ist dabei, daß der Ablauf für die abgeschiedene Flüssigkeit niveaubildend ausgeführt ist und aus dieser angesammelten Flüssigkeitsmenge genügend Flüssigkeit durch die Einlaßstutzen in die Drucktaschen zurückfließen kann, so daß die internen Verbindungen von der zurückfließenden Flüssigkeit abgedichtet sind und keine Luft in die Maschine angesaugt werden kann.

Die Flüssigkeitsrückläufe können Rohrverbindungen zwischen abscheiderinternen und abscheiderexternen Teilen der Einlaßstutzen sein. Zur Flüssigkeitsniveaubildung kann die Ablauföffnung im Boden von einem im Innern des Abscheiders am Boden befestigten Ringträger oder einer Hülse umgeben sein.

Weitere Ausgestaltungen der Erfindung sind Gegenstand zusätzlicher Ansprüche, wobei Anspruch 2 und folgende eine besonders einfache Ausführung der Erfindung betreffen, die nachfolgend anhand eines Ausführungsbeispiels näher erläutert ist.

FIG 1 zeigt eine bekannte doppelflutige Flüssigkeitsmaschine in explodierter Darstellung,

FIG 2 einen Flüssigkeitsabscheider nach der Erfindung im Querschnitt vor dem Stutzen und dem Flüssigkeitsablauf.

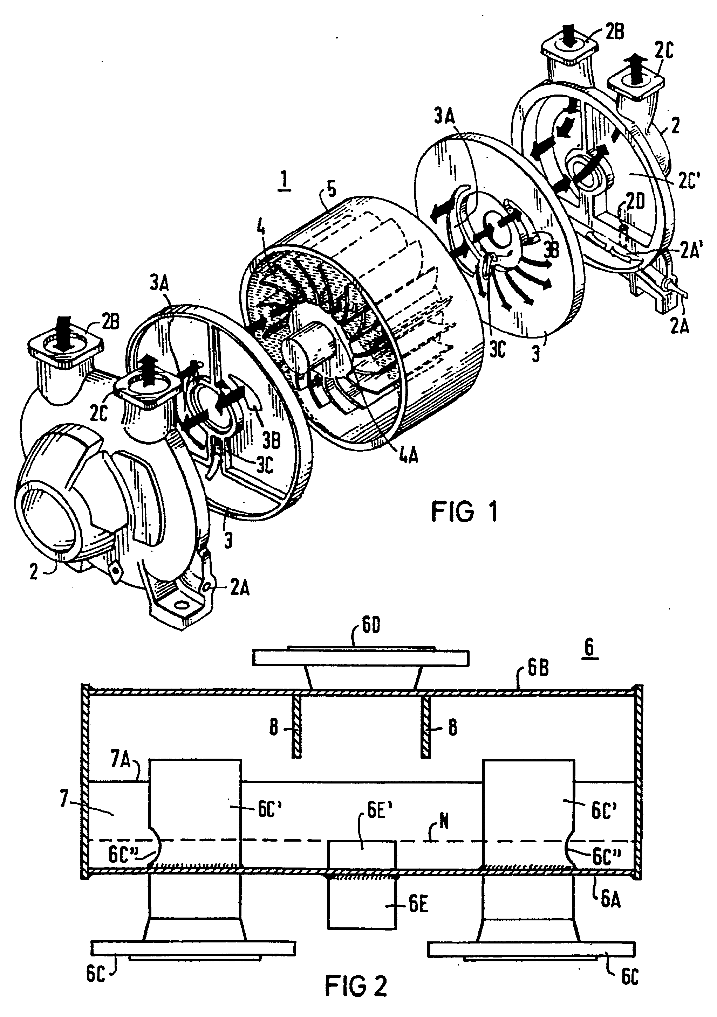

Die doppelflutige Flüssigkeitsringmaschine 1 weist zwei endseitige Seitenschilde 2, zwei an diesen innenseitig angrenzende Steuerscheiben 3 sowie ein gemeinsames Gehäuse 5 für das zweiflutige Schaufelrad 4 mit der Welle 4A auf. Der Maschine ist ein Flüssigkeitsabscheider 6 nach der Erfindung gemäß FIG 2 in an sich bekannter Weise zugeordnet, wobei die Druckstutzen 2C der Seitenschilde 2 mit den Einlaßstutzen 6C des Flüssigkeitsabscheiders 6 verbunden sind.

Die Zuführung der den im Gehäuse 5 rotierenden Flüssigkeitsring ständig ergänzenden Betriebsflüssigkeit kann über Betriebsflüssigkeitszulauf 2A in den Seitenschilden 2 erfolgen, wobei die Betriebsflüssigkeit durch Betriebsflüssigkeitskanäle 2A' in den Drucktaschen 2C' der Seitenschilde 2 über einen Betriebsflüssigkeitsdurchlaß 3C in den Steuerscheiben 3 in den rotierenden Flüssigkeitsring gelangt.

Das zu fördernde gasförmige Medium wird über die Saugstutzen 2B der Seitenschilde 2 und die Saugschlitze 3A der Steuerscheiben 3 zugeführt. Das in den Schaufelradzellen komprimierte Gas wird mit Teilen des Flüssigkeitsringes über die Druckschlitze 3B der Steuerscheiben 3, die Druckstutzen 2C und die Einlaßstutzen 6C in den Flüssigkeitsabscheider 6 gefördert und dort der mitgeförderte Flüssigkeitsanteil abgeschieden.

Im Falle einer von außen zugeführten frischen Betriebsflüssigkeit wird die im Flüssigkeitsabscheider abgeschiedene Flüssigkeit durch einen bodenseitigen Flüssigkeitsablauf 6E nach außen abgeführt. Das geförderte Gas entweicht dem Flüssigkeitsabscheider 6 über einen deckseitigen Auslaßstutzen 6D.

Bei "Sparbetrieb" oder "Sparschaltung" der Flüssigkeitsringmaschine wird die in die Drucktaschen 2C' ausgeschobene Flüssigkeit teilweise wieder der Flüssigkeitsringmaschine zugeführt.

Damit nicht durch fertigungstechnische Unsymmetrien im Gehäuse, im Schaufelrad sowie den Steuerschilden und Steuerscheiben bei kleinen Ansaugdrucken der Fall eintreten kann, daß nur ein einseitiger Flüssigkeitsausschub zu einem der Druckstutzen erfolgt und von der Drucktasche des Druckstutzens über die betreffende interne Verbindung 2D Luft angesaugt wird, was zu Minderleistungen der Flüssigkeitsringmaschine führt, sind Mittel zur Sicherstellung eines bestimmten Flüssigkeitsniveaus im Abscheider und zur Rückführung einer ausreichenden Flüssigkeitsmenge vom Abscheider zu der betreffenden Drucktasche vorgesehen.

Hierzu ist jeder Einlaßstutzen 6C mit einem über den Boden des Flüssigkeitsabscheiders 6 reichende Steigrohr 6C' mit mindestens einer bis zum Boden reichenden seitlichen Öffnung 6C" versehen und der Flüssigkeitsablauf 6E mit einem innen vorstehenden niveaubildenden überstehenden Rohrstück 6E' versehen, die einen Flüssigkeitsstand mit einem maximalen Flüssigkeitsniveau N ermöglicht, der von der zuströmenden Flüssigkeit über die Einlaßstutzen 6C gespeist wird und ausreicht, beide Drucktaschen 2C' zu versorgen, so daß Betriebsflüssigkeit beiden Seitenschilden in ausreichender Menge zufließen kann.

Die Einlaßstutzen 6C, 6C' mit den Öffnungen 6C" und der Flüssigkeitsablauf 6E, 6E' befinden sich im gleichen Teil des Flüssigkeitsabscheiders 6, der durch eine bis zum Boden reichende Kammerwand 7 von dem Teil mit dem Auslaßstutzen 6D in etwa halber Höhe (Oberkante 7A) abgeteilt ist. Im oberen ungeteilten Raum sind noch in an sich bekannter Weise Prallwände 8 für die Flüssigkeit dem Auslaßstutzen abschirmend zugeordnet. Die Kammerwand 7 ist niedriger als die Steigrohre 6C' aber höher als das überstehende Rohrstück 6E' bemessen.

Anstelle nur einer seitlichen Öffnung 6C" können auch mehrere Öffnungen in unterschiedlichem Abstand zum Boden und/oder von unterschiedlicher Größe vorgesehen sein.

**Ansprüche**

1. Flüssigkeitsabscheider mit zwei bodenseitigen Einlaßstutzen (6C), einem deckseitigen Auslaßstutzen (6D) für das Fördermedium und einem bodenseitigen Flüssigkeitsablauf (6E) für eine in Sparschaltung betriebene doppelflutige Flüssigkeitsringmaschine mit Saug- und Druckstutzen (2B, 2C) sowie Betriebs- flüssigkeitszuläufe (2A) aufweisenden Seitenschil- den, in denen jeweils zwischen dem Betriebsflüssigkeitskanal und einer mit dem Druckstutzen in Verbindung stehenden Drucktasche eine interne Verbindung (2D) vorgesehen ist, wobei die mit ihren Steigrohren (6C') über den Boden des Flüssig- keitsabscheiders überstehenden beiden Einlaßstut- zen auf die Druckstutzen (2C) der beiden Seitenschilde aufsetzbar angeordnet sind, **dadurch gekennzeichnet,** daß der Flüssigkeitsabscheider um den Flüssigkeitsablauf (6E) angeordnete flüssigkeitsniveaubildende Flächen sowie mit den Einlaßstutzen (6C) verbundene und den Boden abgedichtet durchdringende Flüssigkeitsrückläufe aufweist.

2. Flüssigkeitsabscheider nach Anspruch 1, **dadurch gekennzeichnet,** daß der Flüssigkeitsablauf (6E) über den Boden (6A) des Flüssigkeitsabscheiders (6) vorstehend flüssigkeitsniveaubildend angeordnet und die Einlaßstutzen (6C) in ihren über das maximale Flüssigkeitsniveau überstehenden Steigrohren (6C') mindestens jeweils eine bis über das maximale Flüssigkeitsniveau (N) reichende seitliche Öffnung (6C") enthalten.

3. Flüssigkeitsabscheider nach Anspruch 2, **dadurch gekennzeichnet,** daß die seitlichen Öffnungen (6C") an entgegengesetzten Seiten der beiden Steigrohre (6C') angeordnet sind.

4. Flüssigkeitsabscheider nach Anspruch 2 oder 3, **dadurch gekennzeichnet,** daß mehrere Öffnungen im unterschiedlichen Abstand zum Boden (6A) und/oder von unterschiedlicher Größe vorgesehen sind.

5. Flüssigkeitsabscheider nach Anspruch 2, **dadurch gekennzeichnet,** daß der Flüssigkeitsablauf (6E) ein innenseitig überstehendes Rohrstück (6E') mit einer Höhe entsprechend dem maximalen Flüssigkeitsniveau (N) aufweist.

6. Flüssigkeitsabscheider nach einem oder mehreren der vorhergehenden Ansprüche, **dadurch gekennzeichnet,** daß der Einlaßstutzen (6C) sowie der Flüssigkeitsablauf (6E) zwischen zwei mit den am Boden (6A) verbundenen Kammerwänden (7) von geringerer Höhe als die Steigrohre (6C') angeordnet sind.

**Claims**

1. Liquid separator having two inlet connection pieces (6C) on the base side, an outlet connection piece (6D) on the top side for the conveying medium and a liquid outflow (6E) on the base side for a double-flow liquid ring machine operated in economy circuit arrangement having suction and pressure connection pieces (2B, 2C) as well as side shields which have operating liquid inflows (2A) and in which an internal connection (2D) is provided in each case between the operating liquid channel and a pressure pocket communicating with the pressure connection piece, with the two inlet connection pieces, the rising pipes (6C') of which project above the base of the liquid separator, being arranged such that they can be placed onto the pressure connection pieces (2C) of the two side shields, characterised in that the liquid separator has liquid-level forming surfaces which are arranged about the liquid outflow (6E) and also liquid return flows which are connected with the inlet connection pieces (6C) and penetrate the base in a sealed manner.

2. Liquid separator according to claim 1, characterised in that the liquid outflow (6E) is arranged so as to protrude above the base (6A) of the liquid separator (6) and forms the liquid level and the inlet connection pieces (6C) contain in their rising pipes (6C'), which project above the maximum liquid level, at least one respective lateral opening (6C") which extends up to above the maximum liquid level (N).

3. Liquid separator according to claim 2, characterised in that the lateral openings (6C") are arranged on opposite sides.

4. Liquid separator according to claim 2 or 3, characterised in that several openings are provided at differing distances from the base (6A) and/or of differing size.

5. Liquid separator according to claim 2, characterised in that the liquid outflow (6E) has a tubular piece (6E') projecting on the inside and having a height corresponding to the maximum liquid level (N).

6. Liquid separator according to one or several of the preceding claims, characterised in that the inlet connection piece (6C) and also the liquid outflow (6E) are arranged between two chamber walls (7) which are connected to the base (6A) and are of less height than the rising pipes (6C').

## Revendications

1. Séparateur de liquide ayant deux tubulures d'entrée (6C) du côté du fond, une tubulure de sortie (6D) du côté supérieur pour le fluide à véhiculer, et une évacuation du liquide (6E) du côté du fond, pour une machine à anneau liquide à double flux fonctionnant en circuit économique et à tubulures d'aspiration et de refoulement (2B, 2C), ainsi que des flasques latéraux comportant des arrivées (2A) de liquide et dans chacun desquels il est prévu un conduit intérieur (2D) entre le canal pour le liquide et une poche de refoulement communiquant avec la tubulure de refoulement, les deux tubulures d'entrée, en saillie par leurs tubes ascendants (6C') du fond du séparateur de liquide pouvant être montées sur les tubulures de refoulement (2C) des deux flasques latéraux, caractérisé, en ce que le séparateur de liquide comporte des surfaces disposées autour de l'évacuation du liquide (6E) et déterminant le niveau du liquide, ainsi que des conduits de retour du liquide, qui communiquent avec les tubulures d'entrée (6C) et qui traversent le fond de manière étanche.

2. Séparateur de liquide suivant la revendication 1, caractérisé, en ce que l'évacuation de liquide (6E) est disposée, de manière à déterminer le niveau du liquide, en saillie au-dessus du fond (6A) du séparateur de liquide (6), et la tubulure d'entrée (6C) comporte, sur ses tubes ascendants (6C'), en saillie au-dessus du niveau maximum du liquide, au moins un orifice (6C") latéral et s'étendant jusqu'au-dessus du niveau maximum (N) du liquide.

3. Séparateur de liquide suivant la revendication 2, caractérisé, en ce que les orifices latéraux (6C") sont disposés sur les côtés opposés des deux tubes ascendants (6C').

4. Séparateur de liquide suivant la revendication 2 ou 3, caractérisé, en ce qu'il est prévu plusieurs orifices à des distances différentes du fond (6A) et/ou de dimension différente.

5. Séparateur de liquide suivant la revendication 2, caractérisé, en ce que l'évacuation du liquide (6E) comporte un tronçon tubulaire (6E') qui fait saillie du côté intérieur et qui a une hauteur correspondant au niveau maximum (N) du liquide.

6. Séparateur de liquide suivant l'une ou plusieurs des revendications précédentes, caractérisé, en ce que la tubulure d'entrée (6C), ainsi que l'évacuation du liquide (6E) sont disposées entre deux parois de chambre (7), qui sont reliées au fond (6A) et qui ont une moindre hauteur que les tubes ascendants (6C').

FIG 1

FIG 2